# EUROPEAN PATENT APPLICATION

(11) **EP 3 657 371 A1**
(43) Date of publication of application: **27.05.2020**
(21) Application number: 17920534.9
(22) Date of filing: 06.12.2017
(51) Int. Cl.: G06F 21/55

(54) **INFORMATION PROCESSING DEVICE, INFORMATION PROCESSING METHOD, AND INFORMATION PROCESSING PROGRAM**

(30) Priority: 02.08.2017 JP 2017150179
(71) Applicant: Mitsubishi Electric Corporation, Chiyoda-ku Tokyo 100-8310 (JP)
(72) Inventor: ONO, Kazuhiro, Tokyo 1008310 (JP); ITO, Hisashige, Tokyo 1080023 (JP); TAKAHASHI, Motoka, Tokyo 1080023 (JP)
(74) Representative: Pfenning, Meinig & Partner mbB
(86) International application number: PCT/JP2017/043869
(87) International publication number: WO 2019/026310

(57) **Abstract**

If an attack activity is detected using a detection rule, an analysis information calculation unit (04) analyzes a situation in which a current attack activity that is the detected attack activity is detected, a situation in which each of a plurality of past attack activities has been detected, the plurality of past attack activities being a plurality of attack activities that has been detected in the past using the detection rule, and a situation that the detection rule assumes, and chooses, based on an analysis result, an arbitrary number of attack activities from the plurality of past attack activities. A warning importance estimation unit (05) presents a countermeasure that has been implemented against the attack activity chosen by the analysis information calculation unit (04).

## Description

### Technical Field

The present invention relates to technique of detecting an attack activity against an information system.

### Background Art

Techniques related to the present invention include techniques disclosed in Patent Literatures 1 to 3.

In Patent Literature 1, a feature amount is calculated based on a URL (Uniform Resource Locator) destination or variable value transmitted by a server, and whether it is a URL that is similar to a signature of a monitoring apparatus is determined. This enables detection of attack communications using the URL destination or variable value that does not perfectly match the signature of the monitoring apparatus and detection of an unknown attack against a terminal or a server. A function to determine a similarity of a signature according to Patent Literature 1 aims to add a new attack pattern.

In Patent Literature 2, feature amounts of current and past CPU (Central Processing Unit) use rates are calculated, paying attention to a phenomenon that resource information of a computer, which is typified by the CPU use rate, often fluctuates due to a security violation activity. Accordingly, if a calculation result coincides with a rule that describes a condition of the resource information, it will be determined that there is abnormality. This enables dealing with the security violation activity against a computer system without analyzing a large amount of various log information.

When providing a maintenance instruction from a remote place, there is a problem that it is difficult to indicate a part on which maintenance is to be implemented based on a monitoring image without a mistake. Regarding this, in Patent Literature 3, coordinate information is generated by a combination of image information of a monitoring target apparatus and CAD (Computer-Aided Design) information of the monitoring target apparatus, and the coordinate information is used to indicate the part on which maintenance is to be implemented.

### Citation List

### Patent Literature

Patent Literature 1: JP 2013-011949 A
Patent Literature 2: JP 2016-184358 A
Patent Literature 3: JP 4661512

### Summary of Invention

### Technical Problem

At a security monitoring center that monitors an attack activity, an analyst decides a countermeasure of a detected attack activity. More specifically, the analyst decides the countermeasure of the detected attack activity based on a history of a past attack activity kept at the security monitoring center. However, a different countermeasure is chosen even for the same attack activity depending on a network configuration of a monitoring target, experience of an analyst dealing with the attack activity, and the like. This results in a plurality of histories on different countermeasures for the same attack activity.

There is a problem that, if an inexperienced analyst is to deal with an attack activity, it is difficult to appropriately decide which history to refer to from the plurality of histories of different countermeasures. There is also a problem that, unless an appropriate history to a current attack activity from the plurality of histories is chosen, a wrong countermeasure will be chosen and the attack activity will not be dealt with effectively.

Patent Literatures 1 to 3 do not solve these problems.

A main objective of the present invention is to solve the above problems. In specific, it is the main objective that an appropriate countermeasure is chosen for a detected attack activity.

### Solution to Problem

An information processing apparatus according to the present invention includes:
a choosing unit to analyze, if an attack activity is detected using a detection rule, a situation in which a current attack activity that is the detected attack activity is detected, a situation in which each of a plurality of past attack activities has been detected, the plurality of past attack activities being a plurality of attack activities that has been detected in the past using the detection rule, and a situation that the detection rule assumes, and to choose, based on an analysis result, an arbitrary number of attack activities from the plurality of past attack activities; and
a countermeasure presenting unit to present a countermeasure that has been implemented against the attack activity chosen by the choosing unit.

### Advantageous Effects of Invention

The present invention analyzes a situation in which a current attack activity is detected, a situation in which each of a plurality of past attack activities has been detected, and a situation that a detection rule assumes. The present invention then chooses a past attack activity that is appropriate to the current attack activity from a plurality of past attack activities, and presents a countermeasure against the past attack activity chosen.

Thus, according to the present invention, it is possible for an analyst to choose a countermeasure that is appropriate to a detected attack activity.

### Brief Description of Drawings

Fig. 1 is a diagram illustrating an example of a network configuration according to Embodiment 1;
Fig. 2 is a diagram illustrating an example of a functional configuration of an attack activity analysis support apparatus according to Embodiment 1;
Fig. 3 is a flowchart illustrating a processing flow of the attack activity analysis support apparatus according to Embodiment 1;
Fig. 4 is a diagram illustrating an example of an analysis history table according to Embodiment 1;
Fig. 5 is a diagram illustrating an example of a device management table according to Embodiment 1;
Fig. 6 is a diagram illustrating an example of a similar history comparison table according to Embodiment 1;
Fig. 7 is a diagram illustrating an example of an analysis history chosen according to Embodiment 1;
Fig. 8 is a diagram illustrating an example of presentation to an operator according to Embodiment 1;
Fig. 9 is a diagram illustrating an example of a detection log according to Embodiment 1; and
Fig. 10 is a diagram illustrating an example of a hardware configuration of the attack activity analysis support apparatus according to Embodiment 1.

### Description of Embodiments

Embodiments of the present invention are explained using figures below. In the following description of the embodiments and drawings, components with the same reference signs mean the same or corresponding components.

### Embodiment 1.

### *** Description of Configuration ***

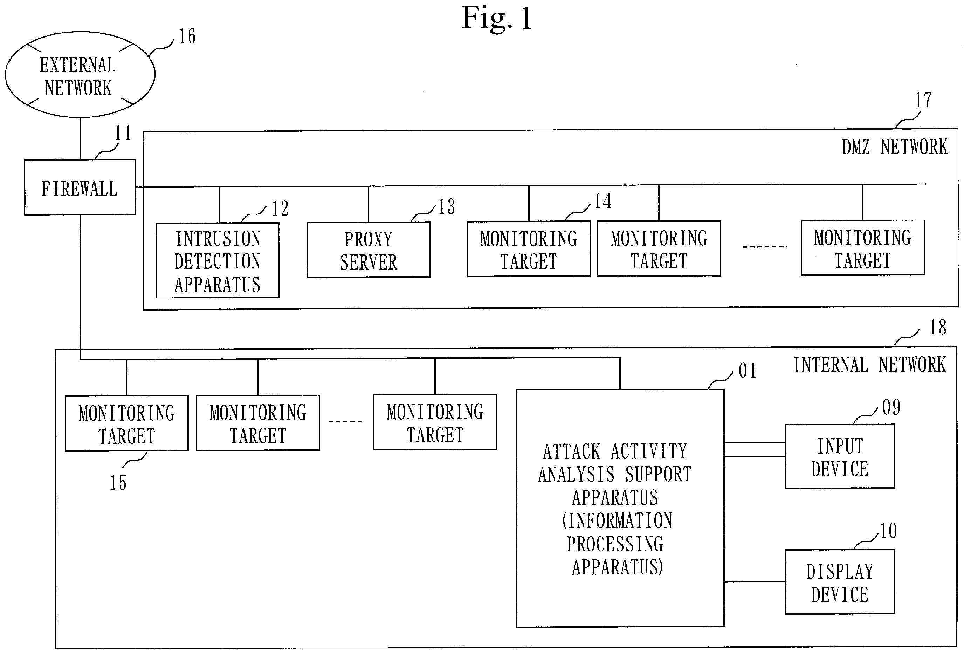

Fig. 1 illustrates an example of a network configuration according to the present embodiment.

According to the present embodiment, a firewall 11 distinguishes between an external network 16 and an internal network 18. The firewall 11 is connected to the external network 16, a DMZ (DeMilitarized Zone) network 17, and the internal network 18. With the firewall 11 and the DMZ network 17, it is possible to prevent an attack activity from the external network 16 against the internal network 18.

The DMZ network 17 includes an intrusion detection apparatus 12, a proxy server 13, and a plurality of monitoring targets 14.

The intrusion detection apparatus 12 connects to the firewall 11.

The intrusion detection apparatus 12 examines communication between the external network 16 and the DMZ network 17 via the firewall 11 and communication between the external network 16 and the internal network 18 via the firewall 11, using a detection rule. And if the intrusion detection apparatus 12 detects an attack activity from the external network 16, the intrusion detection apparatus 12 generates a detection log describing a situation in which the attack activity is detected.

The proxy server 13 connects to the firewall 11.

The proxy server 13 relays communication from a monitoring target 15 within the internal network 18 to the external network 16. The proxy server 13 also relays communication from the external network 16 to the monitoring target 15.

The monitoring target 14 connects to the firewall 11.

The monitoring target 14 includes a mail server, a Web server, and the like.

The internal network 18 includes a plurality of monitoring targets 15 and an attack activity analysis support apparatus 01.

The monitoring target 15 connects to the firewall 11.

The monitoring target 15 includes a personal terminal, a file server, and an AD (Active Directory) server, and the like.

The attack activity analysis support apparatus 01 connects to the internal network 18, and monitors the monitoring target 14 connected to the DMZ network 17 and the monitoring target 15 connected to the internal network 18.

The attack activity analysis support apparatus 01 stores an analysis history that describes a situation and a countermeasure at a time when an attack activity against the monitoring target 14 and the monitoring target 15 is detected. Details of the analysis history will be described later.

If an attack activity from the external network 16 against the DMZ network 17 or the internal network 18 occurs, the attack activity analysis support apparatus 01 presents to an operator an analysis history of a past attack activity that is similar to the attack activity occurred, using a display device 10.

The attack activity means any attack activity that causes an information security threat. The attack activity includes a various kinds of unauthorized access, an attack named "... attack", a preliminary action of these attacks, and the like.

The attack activity analysis support apparatus 01 corresponds to an information processing apparatus. An operation implemented by the attack activity analysis support apparatus 01 corresponds to an information processing method.

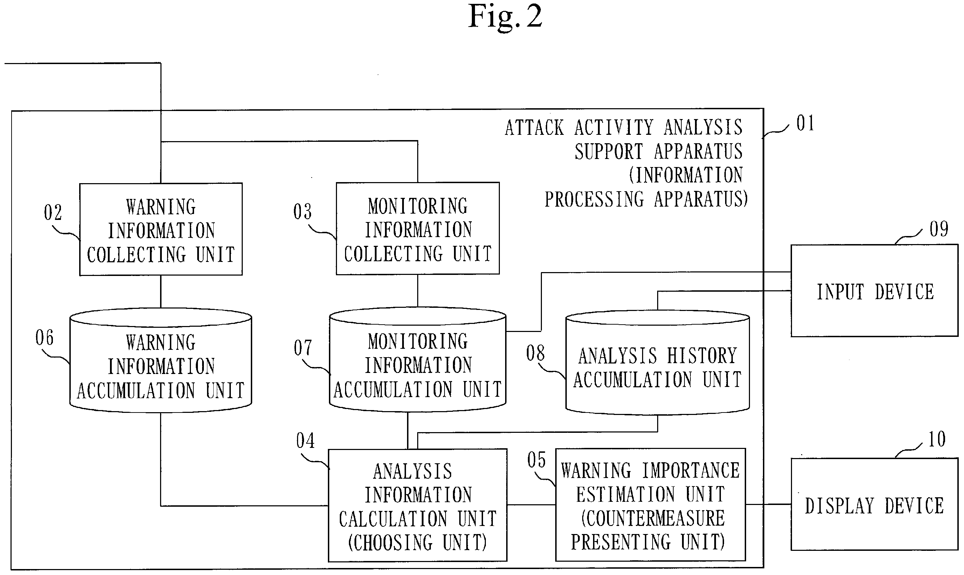

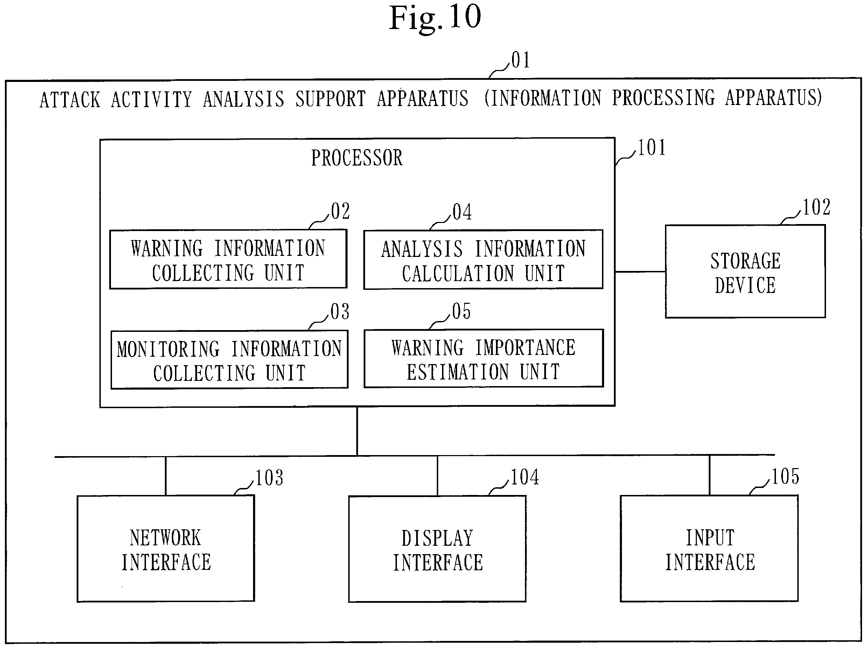

Fig. 2 illustrates an example of a functional configuration of the attack activity analysis support apparatus 01, and Fig. 10 illustrates an example of a hardware configuration of the attack activity analysis support apparatus 01.

The attack activity analysis support apparatus 01 according to the present embodiment is a computer.

As Fig. 10 illustrates, the attack activity analysis support apparatus 01, as hardware, includes a processor 101, a storage device 102, a network interface 103, a display interface 104, and an input interface 105.

As Fig. 2 illustrates, the attack activity analysis support apparatus 01, as a functional configuration, includes a warning information collecting unit 02, a monitoring information collecting unit 03, an analysis information calculation unit 04, warning importance estimation unit 05, a warning information accumulation unit 06, a monitoring information accumulation unit 07, and an analysis history accumulation unit 08 as well.

In the storage device 102, a program to realize functions of the warning information collecting unit 02, the monitoring information collecting unit 03, the analysis information calculation unit 04, and the warning importance estimation unit 05 are stored.

And, the processor 101 executes the program to operate the warning information collecting unit 02, the monitoring information collecting unit 03, the analysis information calculation unit 04, and the warning importance estimation unit 05 as described later.

Fig. 10 schematically illustrates a situation in which the processor 101 executes the program to realize the functions of the warning information collecting unit 02, the monitoring information collecting unit 03, the analysis information calculation unit 04, and the warning importance estimation unit 05.

The program to realize the functions of the warning information collecting unit 02, the monitoring information collecting unit 03, the analysis information calculation unit 04, and the warning importance estimation unit 05 corresponds to an information processing program.

And, the warning information accumulation unit 06, the monitoring information accumulation unit 07, and the analysis history accumulation unit 08 are realized by the storage device 102.

The network interface 103 is an interface with a communication cable of the internal network 18.

The display interface 104 is an interface with the display device 10.

The input interface 105 is an interface with the input device 09.

In Fig. 2, the warning information collecting unit 02 collects a detection log from the intrusion detection apparatus 12 via the network interface 103. The warning information collecting unit 02 also stores the collected detection log in the warning information accumulation unit 06.

The monitoring information collecting unit 03 collects a proxy log from the proxy server 13 via the network interface 103. The monitoring information collecting unit 03 stores the collected proxy log in the monitoring information accumulation unit 07.

If an attack activity is detected by the intrusion detection apparatus 12, the analysis information calculation unit 04 analyzes a situation in which a current attack activity that is the detected attack activity is detected, a situation in which each of a plurality of past attack activities has been detected, the plurality of past attack activities being a plurality of attack activities that has been detected in the past using the detection rule, and a situation that the detection rule assumes. The situation in which each of the plurality of past attack activities has been detected is described in an analysis history accumulated in the analysis history accumulation unit 08. And, information describing a situation that the detection rule assumes is stored, for example, in the storage device 102.

The analysis information calculation unit 04, in specific, analyzes a similarity between the situation in which the current attack activity is detected and the situation in which each of the plurality of past attack activities has been detected. The analysis information calculation unit 04 also analyzes a similarity between the situation in which each of the plurality of past attack activities has been detected and the situation that the detection rule assumes. For example, the analysis information calculation unit 04 analyzes a similarity between time at which the current attack activity is detected and a time band during which each of the plurality of past attack activities has been detected. The analysis information calculation unit 04 also analyzes a similarity between traffic at a time when the current attack activity is detected and traffic at a time when each of the plurality of past attack activities has been detected. The analysis information calculation unit 04 also analyzes a similarity between the time band during which each of the plurality of past attack activities has been detected and a time band that the detection rule assumes. The analysis information calculation unit 04 also analyzes a similarity between the traffic at the time when each of the plurality of past attack activities has been detected and traffic that the detection rule assumes. The analysis information calculation unit 04 further analyzes a similarity between a type of a target device of each of the plurality of past attack activities and a target device that the detection rule assumes.

The analysis information calculation unit 04 then chooses an arbitrary number of attack activities from the plurality of past attack activities based on an analysis result. The analysis information calculation unit 04 corresponds to a choosing unit. A process implemented by the analysis information calculation unit 04 corresponds to a choosing process.

The warning importance estimation unit 05 presents to an operator a countermeasure implemented against the attack activity that is chosen by the analysis information calculation unit 04 via the display device 10.

If two or more attack activities are chosen by the analysis information calculation unit 04, the warning importance estimation unit 05 decides order between or among the two or more attack activities chosen. The warning importance estimation unit 05 decides the order between or among the two or more attack activities chosen, for example, based on importance of respective countermeasures against the two or more attack activities chosen. Then, the warning importance estimation unit 05 presents, according to the decided order, countermeasures implemented against the two or more attack activities chosen.

The warning importance estimation unit 05 corresponds to a countermeasure presenting unit. A process implemented by the warning importance estimation unit 05 corresponds to a countermeasure presenting process.

The warning information accumulation unit 06 accumulates a detection log.

The monitoring information accumulation unit 07 accumulates a proxy log.

The analysis history accumulation unit 08 accumulates an analysis history.

Next, data to be used according to the present embodiment is explained.

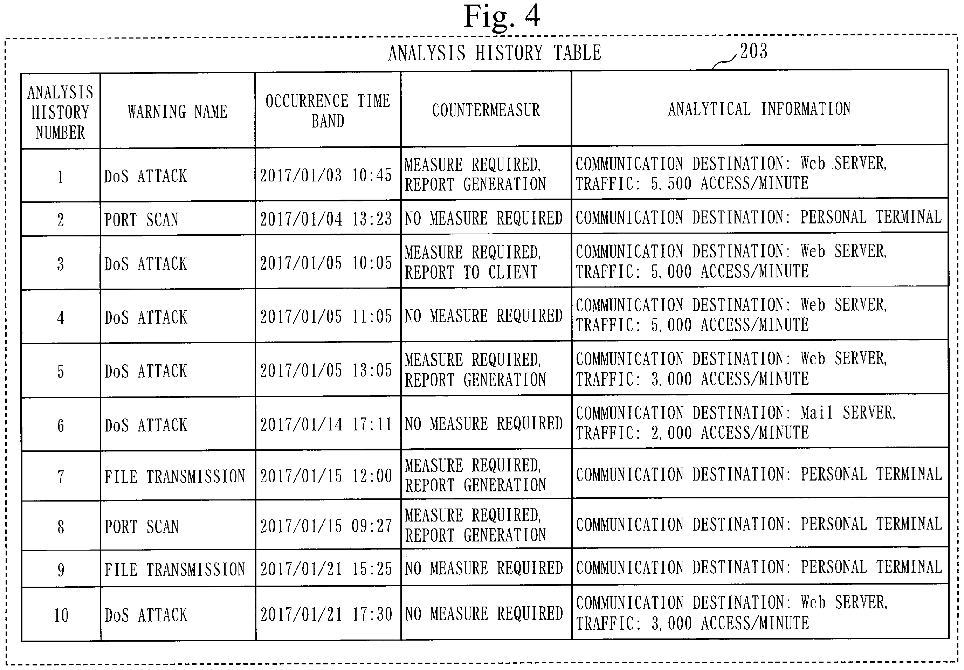

Fig. 4 illustrates an example of an analysis history table 203 to be generated by the analysis information calculation unit 04.

As Fig. 4 illustrates, the analysis history table 203 includes a plurality of analysis histories that is an analysis result of past attack activities. Each record in Fig. 4 is the analysis history. Each analysis history includes an analysis history number, a warning name, an occurrence time band, a countermeasure, and analytical information.

The analysis history number is a sequential number that is automatically set by the analysis information calculation unit 04.

The countermeasure is designated by an operator of the attack activity analysis support apparatus 01.

The warning name and the occurrence time band are generated by a detection log transmitted from the intrusion detection apparatus 12. The intrusion detection apparatus 12 analyzes communication from the external network 16 to the internal network 18, using a detection rule. If an attack activity is detected, the intrusion detection apparatus 12 identifies a type of the attack activity based on the detection rule. The intrusion detection apparatus 12 identifies which of a Dos attack, a port scan, or a file transmission the type of the detected attack is, for example. Then, the intrusion detection apparatus 12 includes the identified attack type in the detection log as the warning name. The intrusion detection apparatus 12 also includes a time and date at which the attack activity is detected in the detection log.

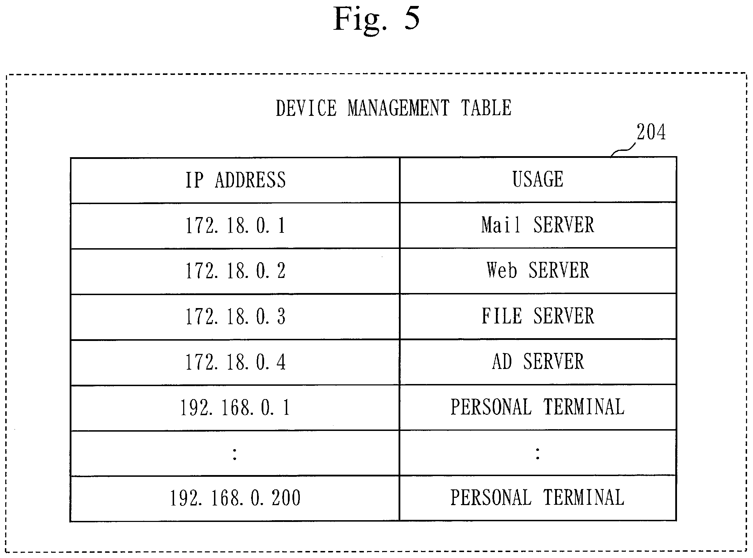

A value of analytical information is also generated from the detection log. For example, the intrusion detection apparatus 12 identifies a communication destination of the attack activity by an IP address of a transmission destination of communication data used for the attack activity, and includes a type of the identified communication destination in the detection log. The intrusion detection apparatus 12 may also include only the IP address of the transmission destination of the communication data used for the attack activity in the detection log. In this case, the analysis information calculation unit 04 identifies the type of the communication destination by the IP address of the transmission destination included in the detection log. More specifically, the analysis information calculation unit 04 identifies the type of the communication destination using a device management table 204, exemplified in Fig. 5. The device management table 204 of Fig. 5 describes the IP addresses of devices that consist of each of the monitoring target 14 and the monitoring target 15, and describes usage of each device for each IP address. Usage of a device is a mail server, a Web server, a personal terminal, a file server, an AD server, or the like. The analysis information calculation unit 04 compares the IP address of the transmission destination described in the detection log with the device management table 204, and identifies a type of the communication destination.

The intrusion detection apparatus 12 also includes in the detection log, traffic of the DMZ network 17 or the internal network 18 at the time when the attack activity is detected.

The intrusion detection apparatus 12 does not need to identify at least one of a type of a communication destination or traffic. In other words, the intrusion detection apparatus 12 does not need to include at least one of the type of the communication destination or the traffic in the detection log. In this case, the analysis information calculation unit 04 generates analytical information from a proxy log.

That is, the proxy server 13 may identify the type of the communication destination and the traffic at the time when the attack activity is detected, and describe the identified type of the communication destination and the traffic in the proxy log.

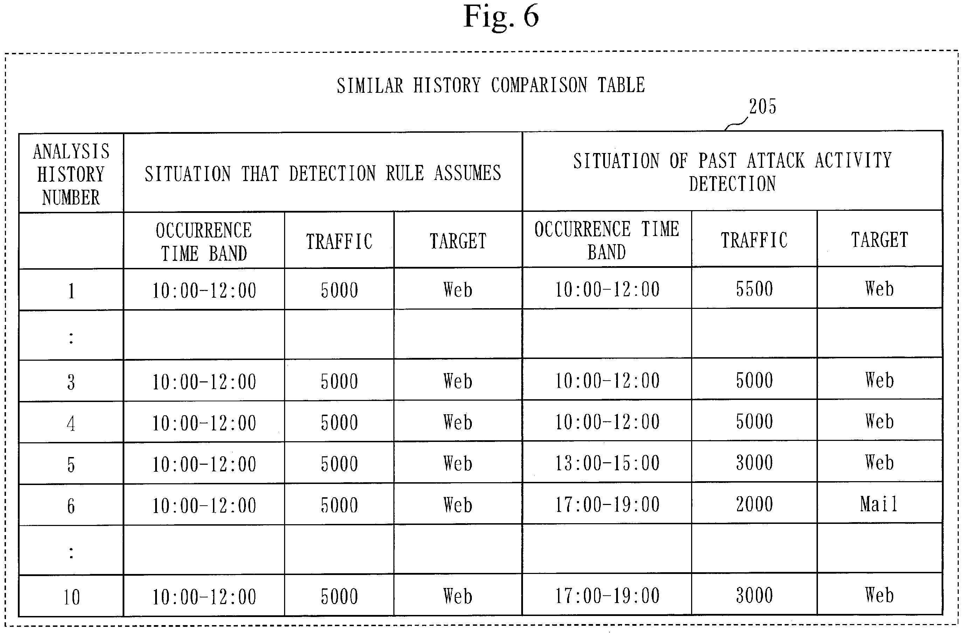

Fig. 6 illustrates an example of a similar history comparison table 205.

As Fig. 6 illustrates, the similar history comparison table 205 consists of an "analysis history number", a "situation that detection rule assumes", and a "situation of past attack activity detection".

The analysis history number means the analysis history number of Fig. 5. The "situation that detection rule assumes" describes a situation that is assumed when a detection rule has been generated. In an example of Fig. 6, a situation that a detection rule to detect a DoS attack assumes is described. For example, the "situation that detection rule assumes" is a time band, traffic, and a target device. In the example of Fig. 6, the detection rule to detect the DoS attack is generated on the assumption that the time band during which the DoS attack occurs is "10:00 - 12:00", the traffic at the time when the DoS attack occurs is 5,000 access/minute, and a device targeted by the DoS attack is a Web server.

The "situation of past attack activity detection" describes a situation at the time of detection of a past attack activity that has been determined as the DoS attack, that is, the past attack activity detected by applying the detection rule to detect the Dos attack. For example, the "situation of past attack activity detection" is a time band, traffic, and a target device. The time band during which the DoS attack of the analysis history number 1 has been detected is "10:00 - 12:00", the traffic at the time when the DoS attack has been detected is 5,500 access/minute, and the device that has been targeted by the DoS attack is the Web server.

The similar history comparison table 205 is used to compare the situation that the detection rule assumes with the situation at the time when respective attack activities have been detected, for each past attack activity.

Fig.6 illustrates the similar history comparison table 205 for the DoS attack. However, a corresponding similar history comparison table 205 exists for other attack activities (such as a port scan and a file transmission).

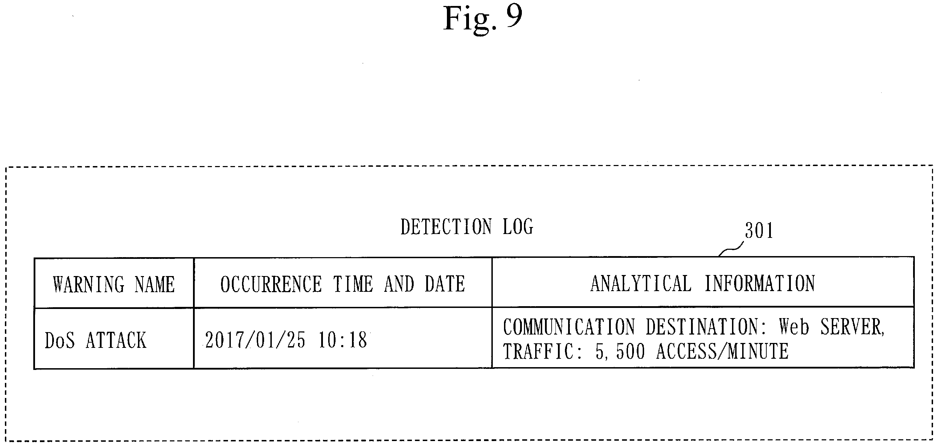

Fig. 9 illustrates an example of a detection log 301 to be transmitted from the intrusion detection apparatus 12 to the attack activity analysis support apparatus 01 when the intrusion detection apparatus 12 newly detects an attack activity.

The detection log 301 consists of a warning name, an occurrence time and date, and analytical information.

Respective meanings of the warning name, the occurrence time and date, and the analytical information are same as those illustrated in Fig. 4.

The warning name, the occurrence time and date, and the analytical information described in Fig. 4 are an attribute of the past attack activity that has been detected in the past, while the warning name, the occurrence time and date, and the analytical information described in Fig. 9 are an attribute of the current attack activity newly detected.

Fig. 9 illustrates an example that a value of the analytical information is also transmitted as the detection log 301 from the intrusion detection apparatus 12. However, as described above, the value of the analytical information may be transmitted as the proxy log from the proxy server 13.

### *** Description of Operation ***

Next, an example of operation of the attack activity analysis support apparatus 01 according to the present embodiment is explained.

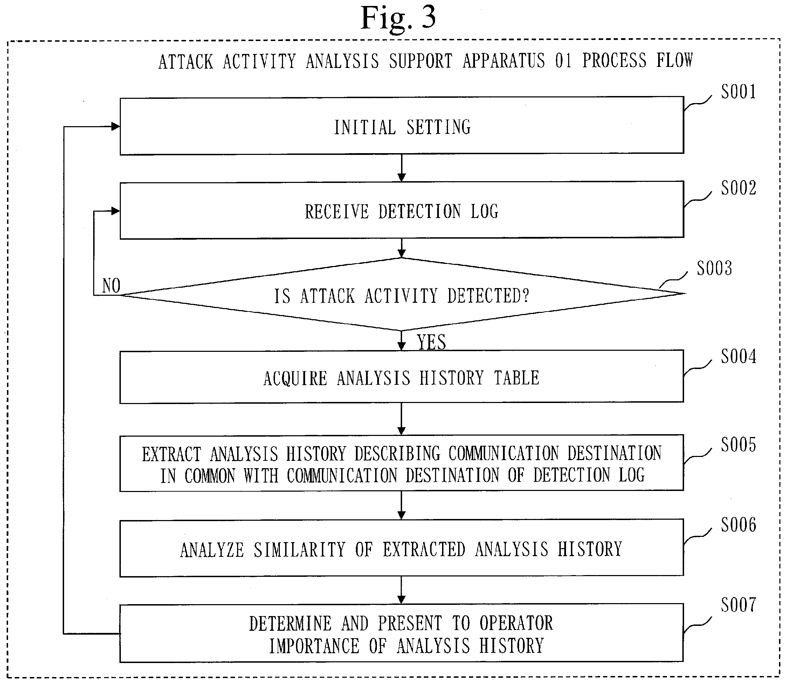

Fig. 3 is a flowchart that illustrates an example of operation of the attack activity analysis support apparatus 01.

Unless the analysis history table 203 illustrated in Fig. 4 is accumulated in the analysis history accumulation unit 08, the analysis information calculation unit 04 generates the analysis history table 203 as an initial setting (step S001).

The analysis information calculation unit 04 also generates the device management table 204 of the monitoring target 14 and the monitoring target 15 if necessary.

The warning information collecting unit 02 periodically receives a detection log from the intrusion detection apparatus 12, and stores the received detection log in the warning information accumulation unit 06 (step S002).

The intrusion detection apparatus 12 periodically transmits the detection log even if no attack activity is detected. If the intrusion detection apparatus 12 detects no attack activity, the intrusion detection apparatus 12 transmits a detection log that is different from a detection log transmitted when an attack activity is detected. For example, the intrusion detection apparatus 12 transmits a detection log with a column of the warning name of Fig. 9 being left blank.

The warning information collecting unit 02 determines whether the received detection log is a detection log that notifies of detection of an attack activity (step S003). For example, the warning information collecting unit 02 determines whether any value is set in the column of the warning name of the received detection log.

If the received detection log is the detection log that notifies of the detection of the attack activity, a process proceeds to step S004. On the other hand, if the received detection log is not the detection log that notifies of the detection of the attack activity, process goes back to step S002.

Here, assume that the warning information collecting unit 02 receives the detection log 301 illustrated in Fig. 9. In other words, it is assumed that a DoS attack has been detected by the intrusion detection apparatus 12.

If YES in step S003, meaning that the intrusion detection apparatus 12 detects an attack activity, the warning information collecting unit 02 outputs the detection log received from the intrusion detection apparatus 12 to the analysis information calculation unit 04.

The analysis information calculation unit 04 acquires from the analysis history accumulation unit 08, the analysis history table 203 corresponding to the warning name that is described in the detection log acquired from the warning information colleting unit 02 (step S004). In specific, the analysis information calculation unit 04 acquires the analysis history table 203 of Fig. 4 corresponding to the DoS attack being the warning name of the detection log 301 of Fig. 9.

Next, the analysis information calculation unit 04 extracts from the analysis history table 203, an analysis history that describes a communication destination in common with a communication destination described in the detection log (step S005).

In an example of Fig. 4, the analysis information calculation unit 04 extracts analysis histories of analysis history numbers 1, 3, 4, 5, and 10 of which communication destination is a Web server.

The analysis information calculation unit 04 next analyzes a similarity of the analysis history extracted in step S005 (step 0006).

The similar history comparison table 205 is used for a similarity analysis. In specific, the analysis information calculation unit 04 calculates a similarity between time at which a current attack activity is detected that is described in the detection log and time bands that are described in the "occurrence time band" of the "situation of past attack activity detection" of analysis history numbers 1, 3, 4, 5, and 10. The analysis information calculation unit 04 also calculates a similarity between traffic at a time when the current attack activity is detected that is described in the detection log and traffic that is described in the "traffic" of the "situation of past attack activity detection" of analysis history numbers 1, 3, 4, 5, and 10. The analysis information calculation unit 04 also calculates a similarity between time bands that are described in the "occurrence time band" of the "situation of past attack activity detection" of analysis history numbers 1, 3, 4, 5, and 10 and a time band described in the "occurrence time band" of the "situation that detection rule assumes". The analysis information calculation unit 04 also calculates a similarity between traffic that is described in the "traffic" of the "situation of past attack activity detection" of analysis history numbers 1, 3, 4, 5, and 10 and traffic described in the "traffic" of the "situation that detection rule assumes". The analysis information calculation unit 04 further calculates a similarity between types of devices that are described in the "target" of the "situation of past attack activity detection" of analysis history numbers 1, 3, 4, 5, and 10 and types of devices described in the "target" of the "situation that detection rule assumes".

In the detection log 301 of Fig. 9, the occurrence time is "10:18", and the traffic is "5,500 access/minute". Accordingly, a high similarity is provided to the analysis history numbers 1,3, and 4 in relation to a current attack activity. In the "situation that detection rule assumes" of Fig. 6, the occurrence time band is "10:00-12:00", the "traffic" is "5,000", and the "target" is "Web". Accordingly, a high similarity is provided to the analysis history numbers 1,3, and 4 in relation to the detection rule as well. According to the present embodiment, a calculation method of a similarity itself is not concerned.

As a result, in the example of Fig 6., the analysis information calculation unit 04 choses analysis histories of analysis history numbers 1, 3, and 4 that are with a high similarity as a history appropriate to an analysis of a newly occurred detection log.

The analysis information calculation unit 04 then outputs the analysis histories of analysis history numbers 1, 3, and 4 (relevant records of Fig. 4) to the warning importance estimation unit 05.

The warning importance estimation unit 05 acquires the analysis history from the analysis information calculation unit 04, and presents, according to the importance of the acquired analysis history, the acquired analysis history to an operator via the display device 10 (step S007).

If the warning importance estimation unit 05 acquires one analysis history from the analysis information calculation 04, the warning importance estimation unit 05 presents the acquired analysis history to the operator via the display device 10.

On the other hand, if the warning importance estimation unit 05 acquires a plurality of analysis histories from the analysis information calculation 04, the warning importance estimation unit 05 determines an importance of the analysis histories. The warning importance estimation unit 05 then decides order between or among the plurality of analysis histories according to the importance, and presents, according to the decided order, the plurality of analysis histories to the operator via the display device 10.

A determining method of the importance of the analysis history is as described below.

First, the warning importance estimation unit 05 changes the order to place an analysis history that requires a countermeasure at a higher rank based on an item regarding necessity of countermeasure written in a "countermeasure" of an analysis history. Next, the warning importance estimation unit 05 changes the order to place at a higher rank, an analysis history having a description of "report to client" in an item of a countermeasure detail written in the "countermeasure" of the analysis history.

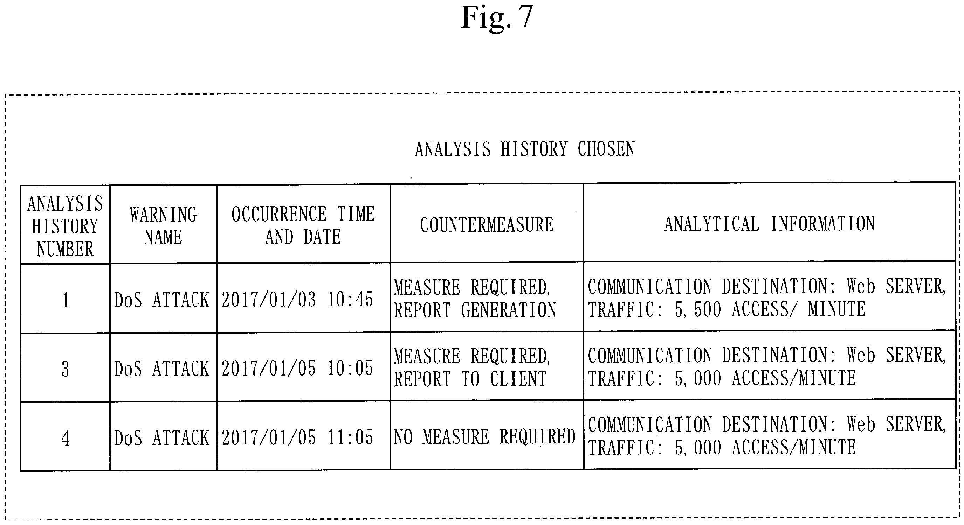

Fig. 7 illustrates order of the analysis history notified to the warning importance estimation unit 05. In an example of Fig. 7, a notification is made by the analysis information calculation unit 04 to the warning importance estimation unit 05 in order of analysis history numbers 1, 3, and 4.

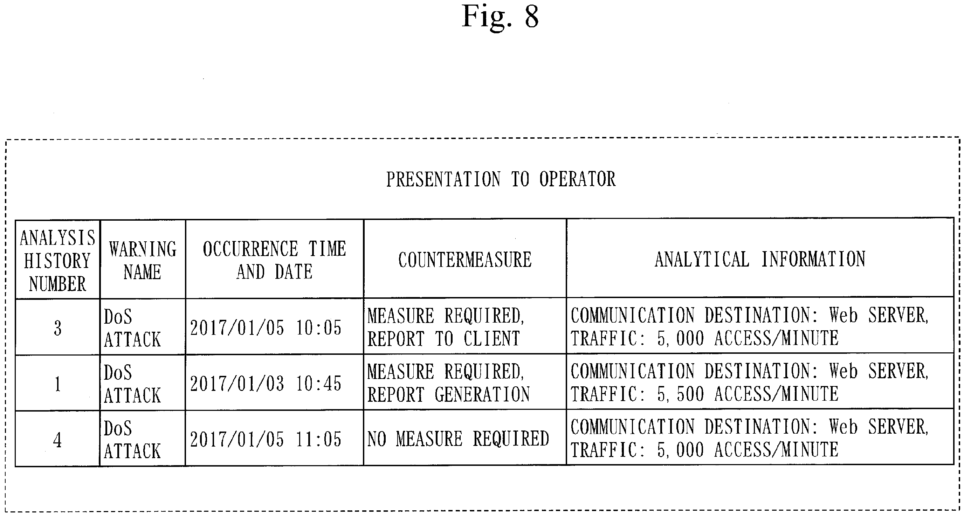

Fig 8. illustrates order of the analysis history after the order is changed by the warning importance estimation unit 05. In an example of Fig. 8, the order of the analysis histories is changed to order of analysis history numbers 3, 1, and 4. In other words, the analysis history of analysis history number 3 having a description of "report to client" is the most important, and the analysis history of analysis history number 1 having a description of "measure required" is the second important.

The warning importance estimation unit 05 presents a plurality of analysis histories in the order illustrated in Fig. 8 to an operator.

The operator may examine a countermeasure against a newly detected current attack activity referring to description in the column of the "countermeasure" of the analysis history presented by the warning importance estimation unit 05.

After the operator decides a countermeasure against the newly detected current attack activity, the analysis information calculation unit 04 adds to the analysis history table 203, a new record that describes the description of the detection log 301 of Fig. 9 and the countermeasure decided by the operator.

### *** Description of Advantageous Effects of Embodiment ***

As described above, the present embodiment analyzes a situation in which a current attack activity is detected, a situation in which each of a plurality of past attack activities has been detected, and a situation that a detection rule assumes. And, the present embodiment chooses a past attack activity that is appropriate to the current attack activity from the plurality of past attack activities, and presents a countermeasure against the past attack activity chosen. Therefore, according to the present embodiment, it is possible for even an inexperienced analyst (operator) to choose a countermeasure that is appropriate to the current attack activity.

### *** Description of Hardware Configuration ***

Finally, a supplementary explanation of a hardware configuration of the attack activity analysis support apparatus 01 is described.

The processor 101 illustrated in Fig. 10 is an IC (Integrated Circuit) that implements processing.

The processor 101 is a CPU, a DSP (Digital Signal Processor), and the like.

The storage device 102 illustrated in Fig. 3 is a RAM (Random Access Memory), a ROM (Read Only Memory), a flash memory, an HDD (Hard Disk Drive), and the like.

The network interface 103 illustrated in Fig. 3 is an electronic circuit that implements data communication processing.

The network interface 103 is, for example, a communication chip or a NIC (Network Interface Card).

The storage device 102 also stores an OS (Operating System).

And, at least a part of the OS is implemented by the processor 101.

The processor 101 implements a program to realize functions of the warning information collecting unit 02, the monitoring information collecting unit 03, the analysis information calculation unit 04, and the warning importance estimation unit 05, implementing at least a part of the OS.

By the processor 101 implementing the OS, a task management, a memory management, a file management, a communication control, and the like, are carried out.

At least one of information, data, a signal value, and a variable value that indicates a process result of the warning information collecting unit 02, monitoring information collecting unit 03, analysis information calculation unit 04, and the warning importance estimation unit 05 is stored in at least one of the storage device 102, a register and a cash memory of the processor 101.

The program to realize the functions of the warning information collecting unit 02, the monitoring information collecting unit 03, the analysis information calculation unit 04, and the warning importance estimation unit 05 may be stored in a portable storage medium, such as a magnetic disk, a flexible disk, an optical disc, a compact disc, a Blu-ray (a registered trademark) disc, and a DVD.

A "unit" of the warning information collecting unit 02, the monitoring information collecting unit 03, the analysis information calculation unit 04, and the warning importance estimation unit 05 may be replaced by a "circuit", a "step", a "procedure", or a "process".

The attack activity analysis support apparatus 01 may be realized by a processing circuit. The processing circuit is, for example, a logic IC (Integrated Circuit), a GA (Gate Array), an ASIC (Application Specific Integrated Circuit), and an FPGA (Field-Programmable Gate Array).

In this case, each of the warning information collecting unit 02, the monitoring information collecting unit 03, the analysis information calculation unit 04, and the warning importance estimation unit 05 is realized as a part of the processing circuit.

In this description, a broader concept of a processor, a memory, a combination of the processor and the memory, and the processing circuit is called as "processing circuitry".

In other words, each of the processor, the memory, the combination of the processor and the memory, and the processing circuit is an example of the "processing circuitry".

### Reference Signs List

01: attack activity analysis support apparatus; 02: warning information collecting unit; 03: monitoring information collecting unit; 04: analysis information calculation unit; 05: warning importance estimation unit; 06: warning information accumulation unit; 07: monitoring information accumulation unit; 08: analysis history accumulation unit; 09: input device; 10: display device; 11: firewall; 12: intrusion detection apparatus; 13: proxy server; 14: monitoring target; 15: monitoring target; 16: external network; 17: DMZ network; 18: internal network; 101: processor; 102: storage device; 103: network interface; 104: display interface; 105: input interface

## Claims

1. An information processing apparatus comprising:
a choosing unit to analyze, if an attack activity is detected using a detection rule, a situation in which a current attack activity that is the detected attack activity is detected, a situation in which each of a plurality of past attack activities has been detected, the plurality of past attack activities being a plurality of attack activities that has been detected in the past using the detection rule, and a situation that the detection rule assumes, and to choose, based on an analysis result, an arbitrary number of attack activities from the plurality of past attack activities; and
a countermeasure presenting unit to present a countermeasure that has been implemented against the attack activity chosen by the choosing unit.

2. The information processing apparatus according to claim 1,
wherein the choosing unit analyzes a similarity between the situation in which the current attack activity is detected and the situation in which each of the plurality of past attack activities has been detected, and analyzes a similarity between the situation in which each of the plurality of past attack activities has been detected and the situation that the detection rule assumes.

3. The information processing apparatus according to claim 1,
wherein the choosing unit analyzes a similarity between time at which the current attack activity is detected and a time band during which each of the plurality of past attack activities has been detected, a similarity between traffic at a time when the current attack activity is detected and traffic at a time when each of the plurality of past attack activities has been detected, a similarity between the time band during which each of the plurality of past attack activities has been detected and a time band that the detection rule assumes, and a similarity between the traffic at the time when each of the plurality of past attack activities has been detected and traffic that the detection rule assumes.

4. The information processing apparatus according to claim 3,
wherein the choosing unit analyzes a similarity between a type of a target device of each of the plurality of past attack activities and a target device that the detection rule assumes.

5. The information processing apparatus according to claim 1,
wherein the countermeasure presenting unit decides, if two or more attack activities are chosen from the plurality of past attack activities by the choosing unit, order between or among the two or more attack activities chosen, and presents, according to the decided order, countermeasures implemented against the two or more attack activities chosen.

6. The information processing apparatus according to claim 5,
wherein the countermeasure presenting unit decides the order between or among the two or more attack activities chosen based on importance of respective countermeasures against the two or more attack activities chosen.

7. The information processing apparatus according to claim 1,
wherein the choosing unit analyzes a situation at a time when each of a plurality of past attack activities targeting a device of a same type as a device targeted by the current attack activity has been detected, the plurality of past attack activities being a plurality of past attack activities of a same type as the current attack activity.

8. An information processing method comprising:
by a computer, analyzing, if an attack activity is detected using a detection rule, a situation in which a current attack activity that is the detected attack activity is detected, a situation in which each of a plurality of past attack activities has been detected, the plurality of past attack activities being a plurality of attack activities that has been detected in the past using the detection rule, and a situation that the detection rule assumes, and choosing, based on an analysis result, an arbitrary number of attack activities from the plurality of past attack activities; and
by the computer, presenting a countermeasure that has been implemented against the attack activity chosen.

9. An information processing program that causes a computer to execute:
a choosing process of analyzing, if an attack activity is detected using a detection rule, a situation in which a current attack activity that is the detected attack activity is detected, a situation in which each of a plurality of past attack activities has been detected, the plurality of past attack activities being a plurality of attack activities that has been detected in the past using the detection rule, and a situation that the detection rule assumes, and choosing, based on an analysis result, an arbitrary number of attack activities from the plurality of past attack activities; and
a countermeasure presenting process of presenting a countermeasure that has been implemented against the attack activity chosen by the choosing process.
